# EUROPÄISCHE PATENTANMELDUNG

(11) **EP 2 327 888 A1**
(43) Veröffentlichungstag der Anmeldung: **01.06.2011**
(21) Anmeldenummer: 10015051.5
(22) Anmeldetag: 26.11.2010
(51) Int. Cl.: F16B 21/08, F16B 37/14, B65D 43/02

(54) **Vorrichtung mit Abdeckkappe, Abdeckkappe und Verfahren zum Abdecken einer Öffnung, insbesondere von Schraubenbohrungen**

(30) Priorität: 26.11.2009 DE 102009055861
(71) Anmelder: Praetorius, Max, 91239 Henfenfeld (DE)
(72) Erfinder: Praetorius, Max, 91239 Henfenfeld (DE)
(74) Vertreter: Müller-Boré & Partner Patentanwälte

(57) **Zusammenfassung**

Die Erfindung betrifft eine Vorrichtung wie eine Werkzeugmaschine oder dergleichen mit Schraubenöffnungen und Abdeckkappen (10) zum Abdecken der Schraubenöffnungen. Die Abdeckkappe weist eine konvex gewölbte Form (P1) auf, die durch Umschnappen in eine konkav gewölbte Form (P2) überführbar ist und wobei ein Umfangsrand der Abdeckkappe (10) zumindest teilweise so gestaltet ist, dass in der konkav gewölbten Form (P2) ein Eingriff oder ein Verhaken mit einer Öffnung (20) ermöglicht wird. Des weiteren betrifft die Erfindung ein Verfahren zum Abdecken einer Öffnung (20) mit dem Einsetzen einer derartigen Abdeckkappe (10) in die Öffnung (20).

## Beschreibung

Die vorliegende Erfindung bezieht sich auf eine Vorrichtung wie eine Werkzeugmaschine oder dergleichen mit Schraubenöffnungen und Abdeckkappen zum Abdecken der Schraubenöffnungen sowie auf eine Abdeckkappe und ein Verfahren zum Abdecken einer Öffnung, insbesondere von Schraubenbohrungen.

Wenn Schrauben an Maschinenteilen, Vorrichtungen Fahrzeugen und dergleichen angeordnet sind, stehen Schraubenköpfe unter Umständen hervor, um eine glatte Oberfläche zu stören. Derartig vorstehende Schraubenköpfe führen zu einer Verletzungsgefahr und/ oder Störkontur und beeinträchtigen das äußere Erscheinungsbild der Vorrichtung oder Maschine oder des Fahrzeugs. Auf herkömmliche Weise gibt es sogenannte Zylinder-, Sechskant- und Senkschrauben, deren Köpfe durch eine Zylinder- oder Flach- oder Kegelsenkung in einer Oberfläche versenkt werden können. Derartige Senkschrauben können Innensechskantschrauben, Schlitz- oder Kreuzschlitzschrauben oder auch gewöhnliche Sechskantschrauben sein. Selbst wenn die Schraubenköpfe in einer Oberfläche versenkt sind, gibt es keine vollkommen glatte Oberfläche. Es besteht deshalb ein Bedarf für eine Verbesserung dieser Situation.

Demgemäß besteht die Aufgabe der Erfindung in der Schaffung eines Mittels zum Abdecken von Schraubenöffnungen und eines korrespondierenden Verfahrens. Dieses Mittel soll auf einfache Weise herstellbar und in einer Öffnung einer Oberfläche montier- und demontierbar sein.

Diese Aufgabe wird durch die Merkmale der unabhängigen Ansprüche gelöst.

Vorteilhafte Weiterbildungen sind in den abhängigen Ansprüchen definiert.

Erfindungsgemäß wird eine Abdeckkappe mit einer konvex gewölbten Form zur Verfügung gestellt, die mit der konvexen Oberfläche nach außen in eine abzudeckende Öffnung einzusetzen ist. Nach dem Einsetzen dieser Abdeckkappe wird die konvex nach außen gewölbte Form nach innen gedrückt, so daß die Abdeckkappe eine konkav gewölbte Form einnimmt.

Durch das Umschnappen der Abdeckkappe von der konvex gewölbten Form in die konkav gewölbte Form tritt ein Außen- oder Umfangsrand der Abdeckkappe zumindest teilweise mit einem inneren Umfangsrand der Öffnung in Eingriff. Derart wird die Abdeckkappe auf sichere und einfache Weise in der Öffnung fixiert. Die Oberfläche erhält auf diese Weise eine nahezu glatte und geschlossene Oberfläche, die das Eindringen von Spänen und Schmutz verhindert und so die Verletzungsgefahr beispielsweise aufgrund sich verhakender Späne verhindert.

Unter konvex gewölbter Form ist dabei eine nach außen, d.h. von der Öffnung weg gerichtetete, gewölbte Form zu verstehen. Im Gegensatz hierzu ist unter konkav gewölbter Form eine nach innen, d.h. in die Öffnung hinein gewölbte Form zu verstehen.

Unter in Eingriff treten des Umfangsrands der Abdeckkappe mit dem inneren Umfangsrand der Öffnung ist entweder ein kraftschlüssiger Eingriff bzw. ein Reibungseingriff zu verstehen oder ein formschlüssiger Eingriff. Ein kraftschlüssiger Eingriff kommt zustande, wenn die Öffnung beispielsweise eine im wesentlichen zylindrische Gestalt hat und der Umfang der Abdeckkappe durch den Umschnappvorgang vergrößert wird. Ein formschlüssiger Eingriff bzw. ein Verhaken kommt zustande, wenn der innere Umfangsrand der Öffnung hinterschnitten ist bzw. konisch ausgebildet ist, so dass ein Durchmesser an einer Oberseite bzw. Außenseite der Öffnung kleiner ist als ein Durchmesser weiter unten bzw. weiter innen.

Um ein Verhaken bzw. den formschlüssigen oder kraftschlüssigen Eingriff der Abdeckkappe mit dem Umfangsrand der Öffnung zu verbessern, kann die Abdeckkappe vorzugsweise einen Stehkragen oder andere Verhakelemente wie beispielsweise Rastnasen, Krallen oder Vorsprünge aufweisen. Dieser Stehkragen bzw. die Krallen oder Vorsprünge sind so ausgebildet, daß ein Formschluß oder Kraft- bzw. Reibschluß mit dem Rand der Öffnung entsteht, wenn die Abdeckkappe von der konvex gewölbten Form in die konkav gewölbte Form überführt wird. Auf diese Weise ist die Abdeckkappe in der konvex gewölbten Form leicht in die Öffnung einführbar, weil in dieser konvex gewölbten Form kein Eingriff des Stehkragens bzw. der Krallen bzw. der Vorsprünge mit dem Rand der Öffnung besteht, während ein Eingriff zum Bilden eines Formschlusses zwischen Stehkragen und Kralle bzw. Vorsprünge hergestellt wird, wenn die Abdeckkappe in die konkav gewölbte Form überführt wird.

Vorzugsweise weist die konvex gewölbte Form eine konvex gewölbte Oberseite auf, die durch Umschnappen in eine konkav gewölbte Form der Oberseite überführbar ist.

Weiter bevorzugt steht der Stehkragen sowohl in der konvex gewölbten Form als auch in der konkav gewölbten Form der Abdeckkappe nach unten vor, so dass durch Einsetzen der Abdeckkappe in die Öffnung eine im wesentlichen glatte Oberfläche erzeugt wird.

Vorzugsweise bildet sowohl die konkav gewölbte Form als auch die konvex gewölbte Form jeweils einen stabilen Zustand, während ein Übergang zwischen den beiden Formen instabil ist, so daß ein sogenannter Klick-Klack-Effekt oder eine Schnappwirkung entsteht. In anderen Worten wird die Abdeckkappe durch Ausübung von Druck auf die konvex gewölbte Form in die konkav gewölbte Form umschnappen und umgekehrt, vorzugsweise durch Druckausübung und/oder Ausübung einer Zugkraft beispielsweise mittels eines Magneten. Ein Verbleib der Abdeckkappe in einem Zwischenzustand ist ausgeschlossen.

Vorzugsweise ist die Abdeckkappe zumindest teilweise aus einem magnetischen Material hergestellt. Auf diese Weise kann eine in eine Öffnung eingesetzte und in der konkav gewölbten Form verhakte Abdeckkappe auf einfache Weise aus der Öffnung entnommen werden, in dem die Abdeckkappe mittels eines Magneten in die konvex gewölbte Form zurückgeführt wird. Derart wird der Eingriff der Abdeckkappe mit dem Rand der Öffnung aufgehoben, so daß die Abdeckkappe in der konvex gewölbten Form leicht aus der Öffnung entnommen werden kann.

Vorzugsweise ist die Abdeckkappe zumindest teilweise aus kalt gewalztem Stahlblech hergestellt und weiter bevorzugt mit Zinn beschichtet. In anderen Worten kann die Abdeckkappe aus sogenanntem Weißblech hergestellt sein.

Des weiteren wird durch die Erfindung ein Verfahren zum Abdecken einer Öffnung zur Verfügung gestellt, das den Schritt des Einsetzens einer wie vorstehend beschriebenen Abdeckkappe in eine Öffnung aufweist.

Vorzugsweise wird bei dem Verfahren ein Rand der Öffnung hinterschnitten bzw. konisch ausgebildet, um eine formschlüssige Befestigung der Abdeckkappe an dem Rand der Öffnung zu ermöglichen.

Des weiteren wird ein Verfahren zum Entfernen der Abdeckkappe geschaffen, das den Schritt des Ansetzens eines Magneten an die Abdeckkappe aufweist, um die Abdeckkappe von der konkav gewölbten Form in die konvex gewölbte Form zurückzubringen. Auf diese Weise wird ein Eingriff der Abdeckkappe mit dem Rand der Öffnung aufgehoben, so daß die Abdeckkappe auf einfache Weise aus der Öffnung entnommen werden kann.

Die Erfindung wird nun anhand eines Ausführungsbeispiels unter Bezugnahme auf die Zeichnungen näher erläutert.
Figur 1a zeigt eine Seitenansicht eines ersten Ausführungsbeispiels der Abdeckkappe in der konvex gewölbten Form.
Figur 1b zeigt eine Seitenansicht der Abdeckkappe aus Figur 1 a in der konkav gewölbten Form.
Figur 2a zeigt die Abdeckkappe aus Figur 1a in der konvex gewölbten Form in einer perspektivischen Ansicht.
Figur 2b zeigt die Abdeckkappe aus Figur 1 a in der konkav gewölbten Form in einer perspektivischen Ansicht.
Figur 3 zeigt eine Schnittdarstellung durch eine Schraubenbohrung, in die eine Innensechskantschraube eingesetzt ist und die mit der Abdeckkappe aus Figur 1a abgedeckt ist.
Figur 4 zeigt dieselbe Darstellung wie Figur 3, jedoch ist in Figur 4 die Abdeckkappe in die konkav gewölbte Form überführt, um einen Eingriff mit dem Rand der Öffnung herzustellen.

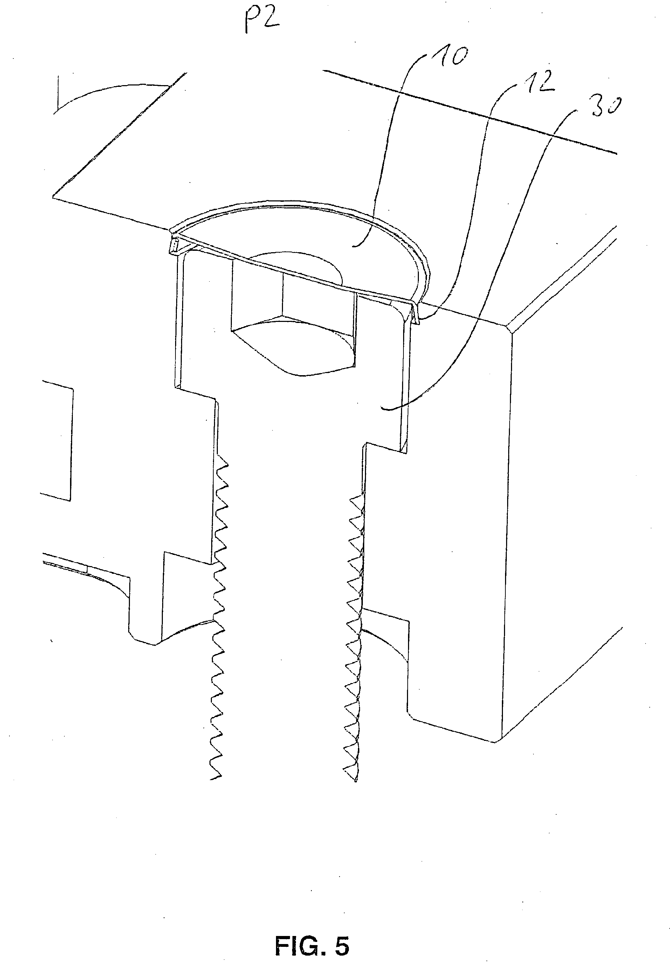

Figur 5 zeigt eine perspektivische Ansicht der Schraubenbohrung von Figur 4 mit der eingesetzten Innensechskantschraube und der Abdeckkappe.
Figur 6 zeigt eine Vorrichtung mit einem Vielzahl von Schraubenbohrungen und in diese eingesetzte Innensechskantschrauben, wobei zwei Schraubenbohrungen durch die Abdeckkappen aus Figur 1 a abgedeckt sind.
Figur 7a zeigt eine Seitenansicht eines zweiten Ausführungsbeispiels der Abdeckkappe in der konvex gewölbten Form.
Figur 7b zeigt eine Seitenansicht der Abdeckkappe aus Figur 7a in der konkav gewölbten Form.
Figur 8a zeigt die Abdeckkappe aus Figur 7a in der konvex gewölbten Form in einer perspektivischen Ansicht.
Figur 8b zeigt die Abdeckkappe aus Figur 7a in der konkav gewölbten Form in einer perspektivischen Ansicht.
Figur 9 zeigt eine Schnittdarstellung durch eine Schraubenbohrung, in die eine Innensechskantschraube eingesetzt ist und die mit der Abdeckkappe aus Figur 7a abgedeckt ist.
Figur 10 zeigt dieselbe Darstellung wie Figur 9, jedoch ist in Figur 10 die Abdeckkappe in die konkav gewölbte Form überführt, um einen Eingriff mit dem Rand der Öffnung herzustellen.
Figur 11 zeigt eine perspektivische Ansicht der Schraubenbohrung von Figur 10 mit der eingesetzten Innensechskantschraube und der Abdeckkappe.

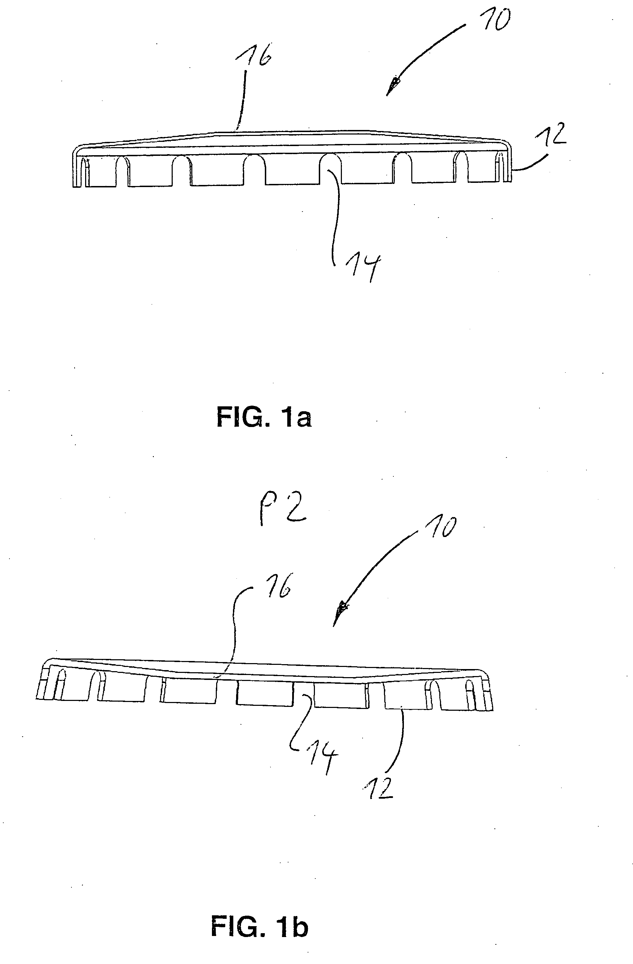

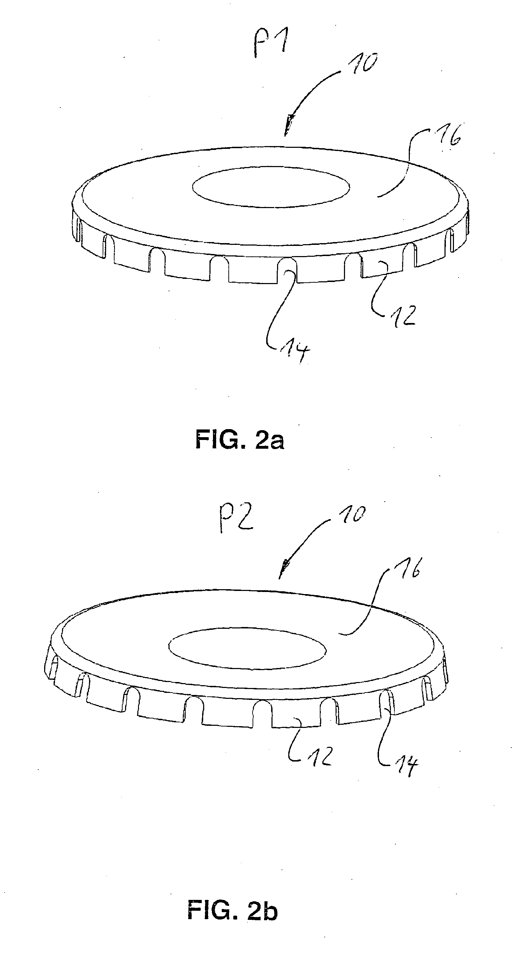

Wie in den Figuren 1a bis 2b gezeigt ist, hat die Abdeckkappe 10 gemäß dem ersten Ausführungsbeispiel vorzugsweise eine kreisförmige Gestalt zum Abdecken einer kreisförmigen Öffnung 20, wie beispielsweise einer Schraubenöffnung. Die Formgebung der Abdeckkappe 10 ist jedoch nicht auf die Kreisform beschränkt, sondern kann auch jede andere Form wie beispielsweise eine ovale Form, eine Ellipsenform, eine Rechteckform oder dergleichen aufweisen.

Die Abdeckkappe 10 hat eine Oberseite 16 mit einer im Ursprungszustand konvex gewölbten Form P1. Nach dem Einsetzen der Abdeckkappe 10 mit der konvex gewölbten Form P1, wie in den Figuren 1a, 2a und 3 gezeigt ist, wird die konvex gewölbte Oberseite 16 der Abdeckkappe 10 beispielsweise mit einem Finger eingedrückt, so daß die konvex gewölbte Form P1 der Oberseite 16 in eine konkav gewölbte Form P2 umschnappt, wie in den Figuren 1b, 2b und 4 gezeigt ist. Durch diesen Klick-Klack-Effekt bzw. das Umschnappen der Oberseite 16 der Abdeckkappe 10 ist ein Umfangsrand der Oberseite 16, der zuvor abwärts geneigt ist, nun aufwärts geneigt. Durch diese Veränderung des Umfangsrands der Oberseite 16 der Abdeckkappe 10 kann eine Einhak- oder Eingriffswirkung an dem Umfangsrand der Abdeckkappe 10 erzeugt werden.

Vorzugsweise ist zumindest ein Stehkragen 12 an dem Umfangsrand der Oberseite 16 der Abdeckkappe 10 angeordnet, der vorzugsweise im wesentlichen rechtwinklig von der Oberseite 16 nach unten vorsteht. Die Erfindung ist jedoch nicht hierauf beschränkt der Stehkragen 12 kann auch aufwärts oder unter einem anderen Winkel als einem rechten Winkel von der Oberseite 16 der Abdeckkappe 10 vorstehen. Der Stehkragen 12 ist so auszubilden, daß er mit einem entsprechenden Abschnitt des Rands 22 einer Öffnung 20, die mit der Abdeckkappe 10 bedeckt werden soll, in Eingriff treten kann.

Vorzugsweise sind mehrere Stehkrägen 12 am Umfang der Oberseite 16 angeordnet und durch Schlitze 14 voneinander getrennt. Es reicht jedoch unter Umständen auch aus, nur einen Stehkragen 12 oder ein Paar Stehkragen 12, 12 vorzugsweise an entgegengesetzten Seiten der Abdeckkappe 10 anzuordnen. Weiter bevorzugt hat die abzudeckende Öffnung 20 eine hinterschnittene Form 22 bzw. einen hinterschnittenen Rand 22 bzw. eine leicht konische Form mit einem kleinen Durchmesser an der Oberseite und einem etwas größeren Durchmesser von der Oberseite entfernt.

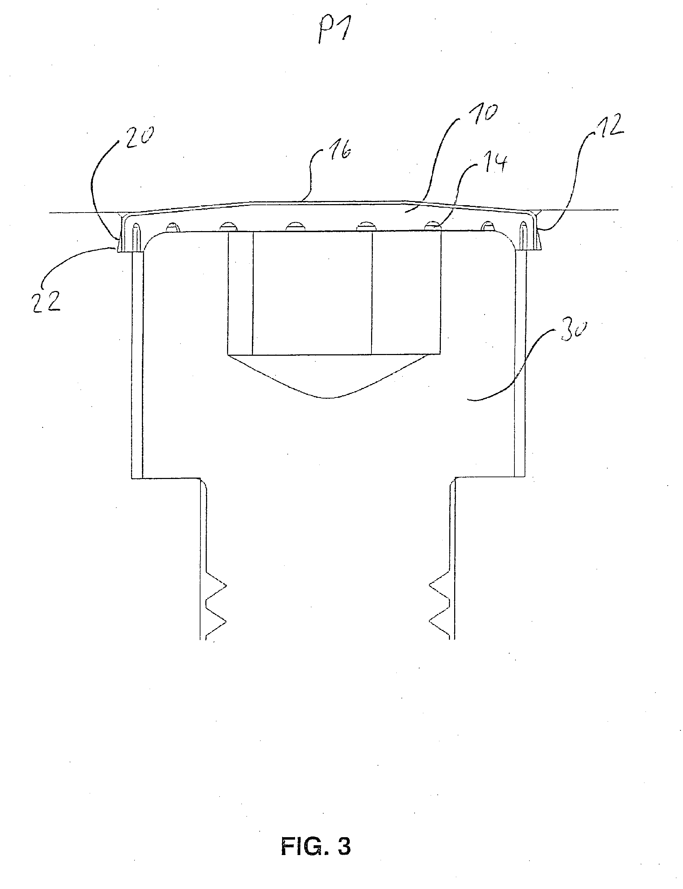

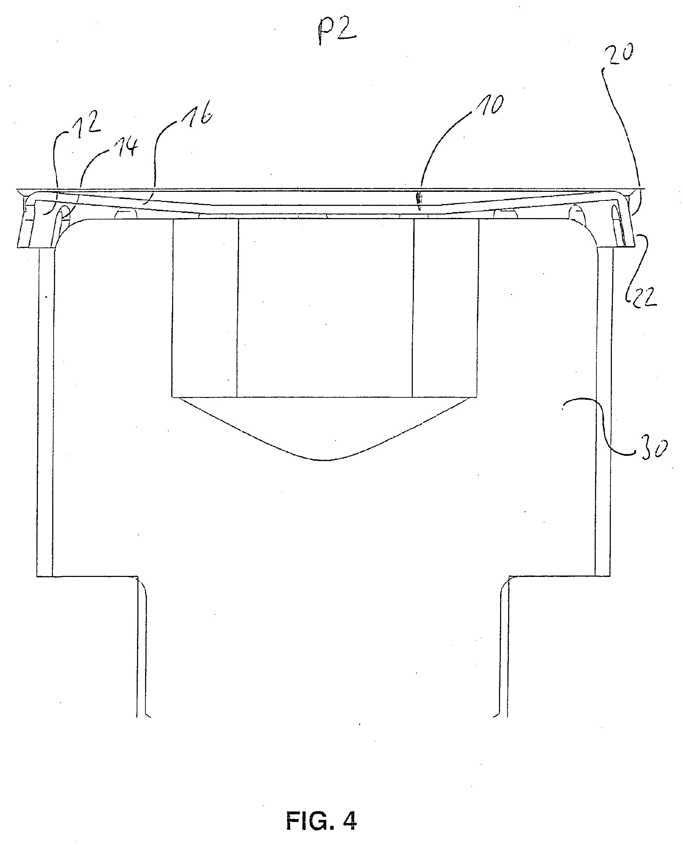

Die in den Figuren gezeigte Abdeckkappe 10 ist vorzugsweise aus einem magnetischen Material hergestellt. Auf diese Weise kann eine in die konkave Form P2 überführte und somit in der Öffnung 20 verhakte Abdeckkappe 10, wie sie in Figur 4 gezeigt ist, auf einfache Weise aus der Öffnung 20 entnommen werden, in dem ein Magnet im wesentlichen auf den zentralen Abschnitt der Oberseite 16 gesetzt wird und durch Ziehen die Oberseite 16 von der konkaven Form P2 in die konvexe Form P1, wie in Figur 3 gezeigt ist, zurückgebracht wird. Durch Zurückbringen der Oberseite 16 der Abdeckkappe 10 in die konvexe Form P1, wird ein Eingriff der Stehkrägen 12 mit dem hinterschnittenen Rand 22 der Öffnung 20 gelöst, so daß die Abdeckkappe 10 leicht aus der Öffnung 20, am besten unter Zuhilfenahme des Magneten, entnommen werden kann. Somit wird eine Abdeckkappe 10 geschaffen, die auf einfache Weise in eine Öffnung 20 eingesetzt und in dieser formschlüssig verhakt werden kann. Darüber hinaus kann diese Abdeckkappe 10 auf einfache Weise unter Zuhilfenahme eines Magneten aus der Öffnung 20 wieder entfernt werden.

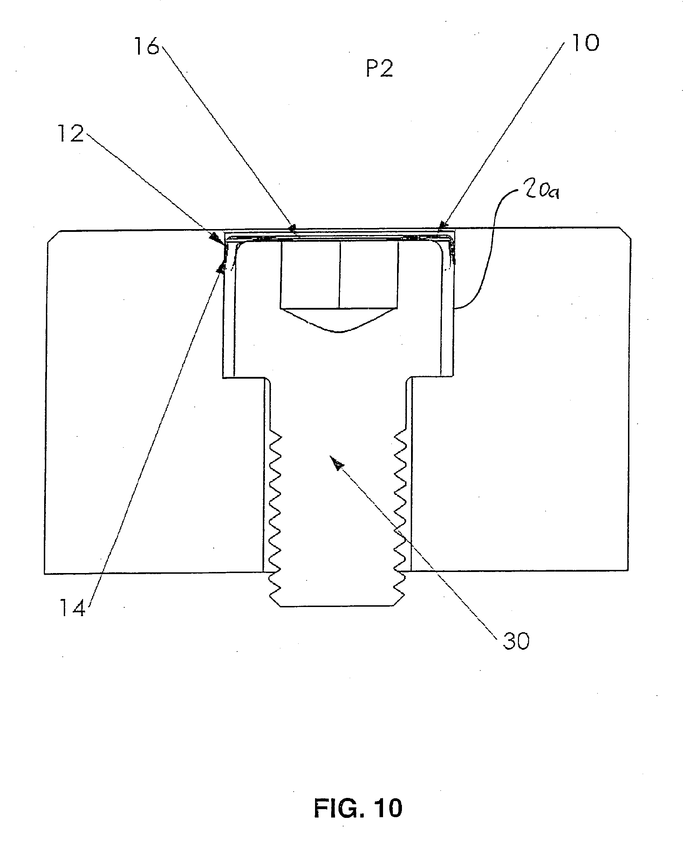

Alternativ oder zusätzlich zu einem Magneten kann die in der konkaven Form P2 befindliche Abdeckkappe 10, wie sie in den Figuren 4 und 10 gezeigt ist, auch durch Druckausübung auf den äußeren Umfangsrand der Oberseite 16 im wesentlichen von oben in den konvexen Zustand überführt werden, um den Eingriff mit dem Innenrand der Öffnung 20 aufzuheben.

Weiter bevorzugt wird die Abdeckkappe 10 aus sogenanntem Weißblech, d.h. einem Stahlblech mit Zinnbeschichtung hergestellt. Vorzugsweise wird kaltgewalztes Stahlblech hierfür verwendet. Die Erfindung ist jedoch nicht hierauf beschränkt, sondern die Abdeckkappe 10 kann auch aus anderen Werkstoffen hergestellt werden wie beispielsweise einem geeigneten Kunststoff. Hierfür eignet sich beispielsweise PTFE (Teflon), Styrol, ABS-Kunststoff, Edelstahl rostfrei oder dergleichen.

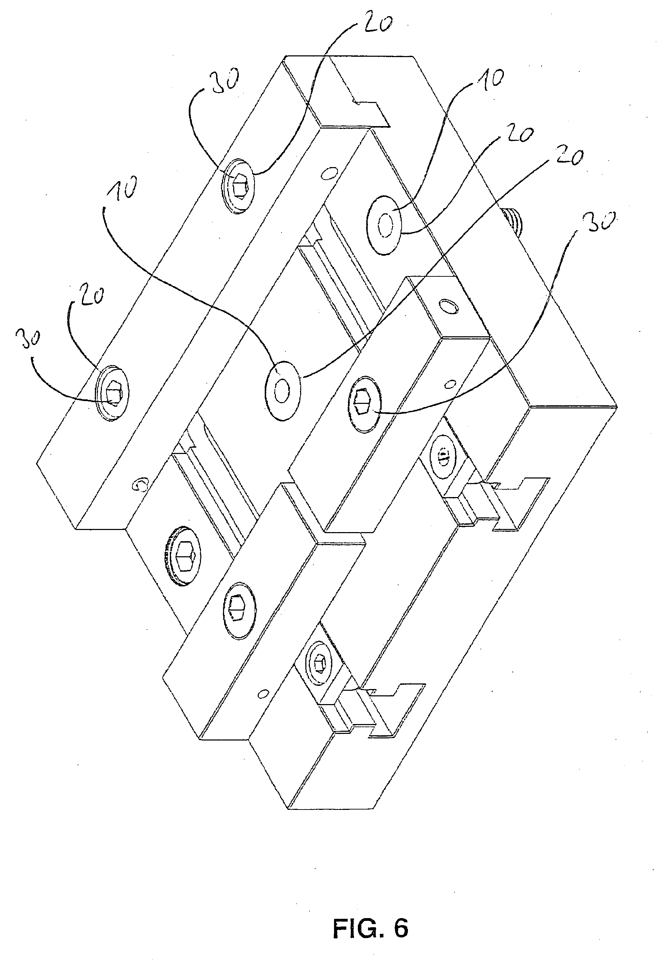

Wie in Figur 6 gezeigt ist, wird durch Einsetzen der Abdeckkappen 10 an Öffnungen 20, in die Innensechskantschrauben 30 eingesetzt sind, eine im wesentlichen glatte Oberfläche einer Vorrichtung erzeugt. Derart können keine Gegenstände an den Öffnungen 20 der Schrauben 30 hängenbleiben und es besteht keine Verletzungsgefahr. Darüber hinaus kann die Vorrichtung aufgrund der glatten Oberfläche sehr leicht gereinigt werden.

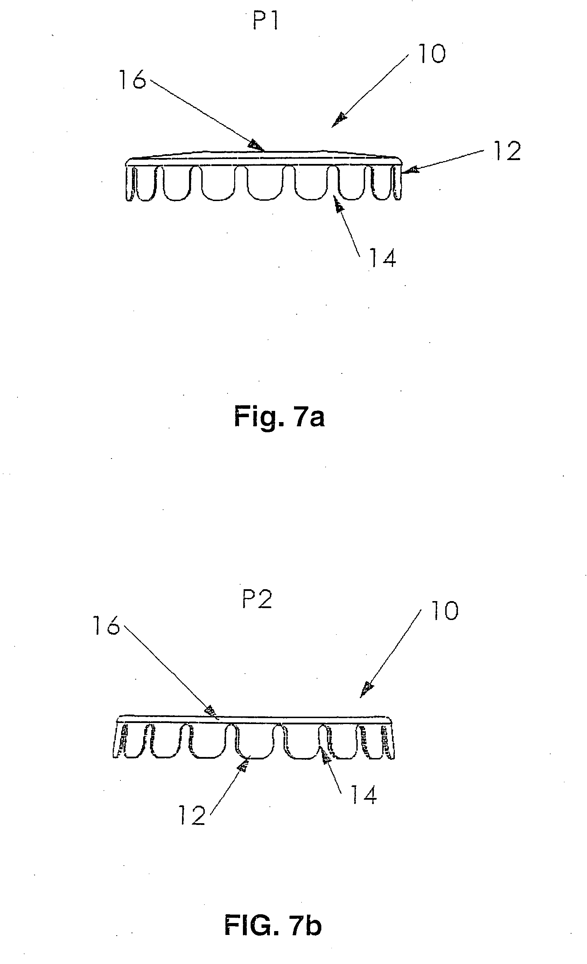

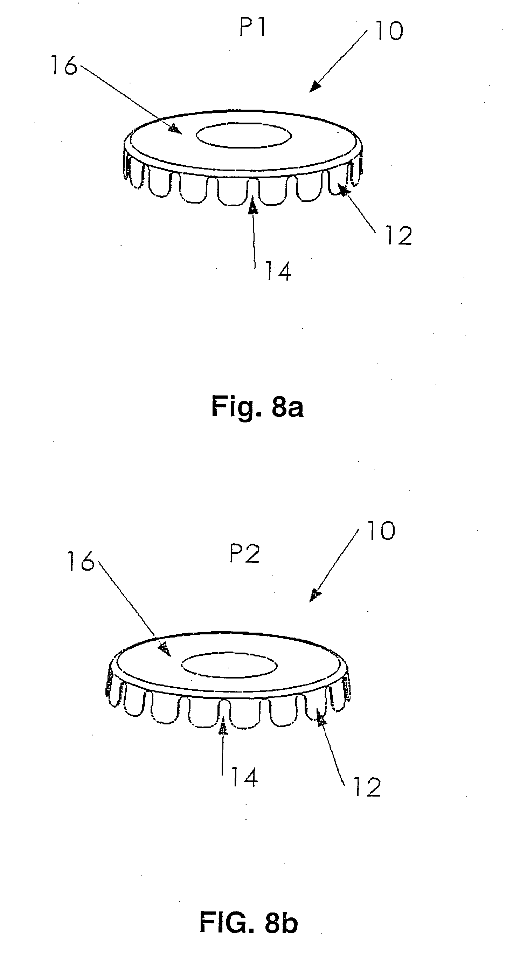

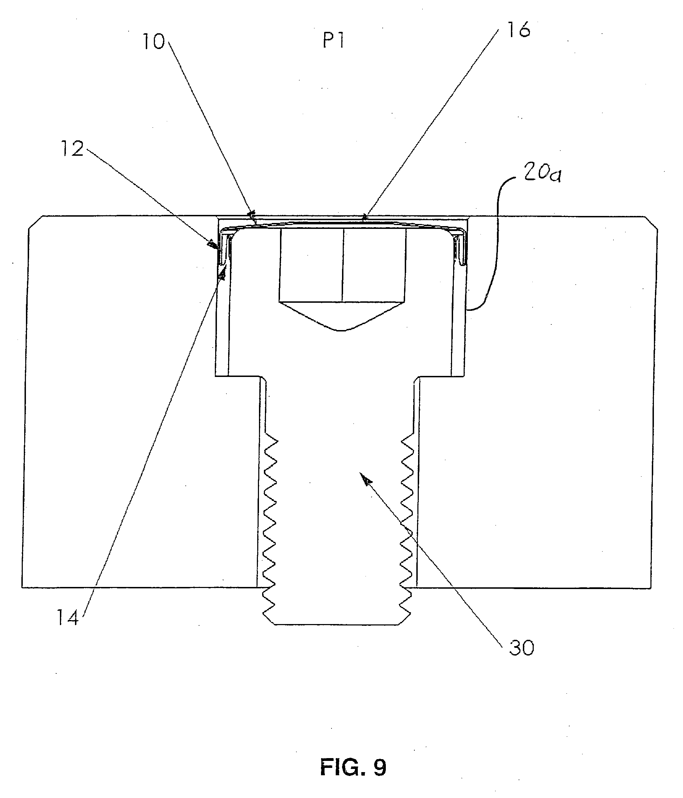

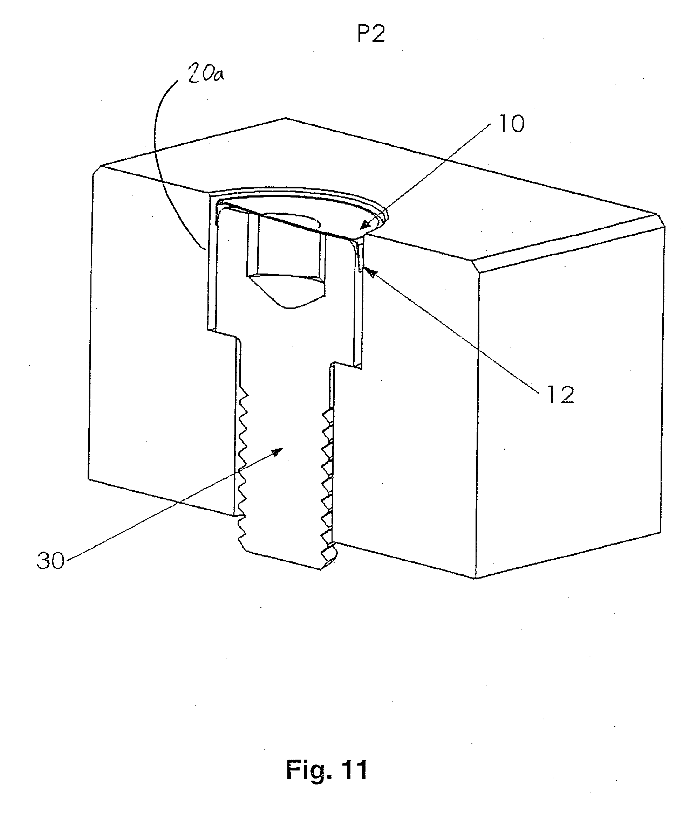

Die Figuren 7a bis 11 zeigen ein zweites Ausführungsbeispiel der Erfindung. Dieses Ausführungsbeispiel ist in vielen Gesichtspunkten identisch mit dem vorherigen Ausführungsbeispiel. Um Wiederholungen zu vermeiden, werden nachfolgend nur die unterschiedlichen Merkmale beschrieben.

Die Öffnung 20a des zweiten Ausführungsbeispiels hat eine im wesentlichen zylindrische Gestalt, die weniger Arbeitsschritte bei der Herstellung erfordert. Deshalb können gemäß dem zweiten Ausführungsbeispiel Herstellungskosten eingespart werden. Dabei kommt es zu einem Reibschluß oder zu einer kraftschlüssigen Verbindung mit der Abdeckkappe 10.

Des weiteren haben die Stehkrägen der Abdeckkappe 10 des zweiten Ausführungsbeispiels abgerundete Enden, um ein Einführen der Abdeckkappe 10 in die Öffnung 20a zu erleichtern.

Obwohl die beiden Ausführungsbeispiele separat beschrieben sind, sollte klar sein, dass einzelne Merkmale des einen Ausführungsbeispiels mit dem anderen Ausführungsbeispiel kombiniert werden können und umgekehrt. Beispielsweise können die Stehkrägen 12 des ersten Ausführungsbeispiels auch abgerundete Enden aufweisen oder umgekehrt, können die Stehkrägen 12 des zweiten Ausführungsbeispiels auch scharfkantige Stehkrägen 12 aufweisen.

Des weiteren könnte eine Abdeckkappe 10 auch unterschiedliche Stehkrägen 12 aufweisen, abgerundete und scharfkantige, oder ein Stehkragen 12 könnte unterschiedliche Enden haben, ein abgerundetes Ende auf einer Seite und ein scharfkantiges auf der anderen Seite.

### Bezugszeichenliste

- 10: Abdeckkappe
- 12: Stehkragen
- 14: Schlitz
- 16: Oberseite
- 20, 20a: Öffnung
- 22: hinterschnittener Rand
- 30: Schraube

## Patentansprüche

1. Vorrichtung mit einer Öffnung (20) insbesondere zum Anordnen einer Schraube (30) sowie einer Abdeckkappe (10) zum Abdecken der Öffnung (20), wobei die Abdeckkappe (10) eine konvex gewölbte Form (P1) aufweist, die durch Umschnappen in eine konkav gewölbte Form (P2) überführbar ist und wobei ein Umfangsrand der Abdeckkappe (10) zumindest teilweise so gestaltet ist, dass in der konkav gewölbten Form (P2) ein Eingriff mit einem Innenrand der Öffnung (20) ermöglicht wird.

2. Vorrichtung nach Anspruch 1, wobei die Öffnung (20) einen hinterschnittenen Rand (22) aufweist, so dass in der konkav gewölbten Form (P2) der Abdeckkappe (10) ein Verhaken mit dem hinterschnittenen Rand (22) der Öffnung (20) ermöglicht wird.

3. Vorrichtung nach einem der vorherigen Ansprüche, wobei an dem Umfangsrand der Abdeckkappe (10) zumindest ein Stehkragen (12) angeordnet ist, der vorzugsweise Schlitze (14) oder Unterbrechungen aufweist.

4. Vorrichtung nach einem der vorherigen Ansprüche, wobei die konvex gewölbte Form (P1) eine konvex gewölbte Oberseite (16) aufweist, die durch Umschnappen in eine konkav gewölbte Form (P2) der Oberseite (16) überführbar ist.

5. Vorrichtung nach einem der vorherigen Ansprüche 3 oder 4, wobei der Stehkragen (12) sowohl in der konvex gewölbten Form (P1) als auch in der konkav gewölbten Form (P2) der Abdeckkappe (10) nach unten vorsteht, so dass durch Einsetzen der Abdeckkappe (10) in die Öffnung (20) eine im wesentlichen glatte Oberfläche der Vorrichtung erzeugt wird.

6. Abdeckkappe (10) mit einer konvex gewölbten Form (P1), die durch Umschnappen in eine konkav gewölbte Form (P2) überführbar ist und wobei ein Umfangsrand der Abdeckkappe (10) zumindest teilweise so gestaltet ist, dass in der konkav gewölbten (P2) Form ein Eingriff oder ein Verhaken mit einem Innenrand der Öffnung (20) ermöglicht wird.

7. Abdeckkappe (10) nach Anspruch 6, wobei die konvex gewölbte Form (P1) eine konvex gewölbte Oberseite (16) aufweist, die durch Umschnappen in eine konkav gewölbte Form (P2) der Oberseite (16) überführbar ist.

8. Abdeckkappe (10) nach einem der vorherigen Ansprüche 6 oder 7, wobei der Stehkragen (12) sowohl in der konvex gewölbten Form (P1) als auch in der konkav gewölbten Form (P2) der Abdeckkappe (10) nach unten vorsteht, so dass durch Einsetzen der Abdeckkappe (10) in die Öffnung (20) eine im wesentlichen glatte Oberfläche der Vorrichtung erzeugt wird.

9. Abdeckkappe (10) nach einem der vorherigen Ansprüche 6 bis 8, wobei die konvex gewölbte Form (P1) und die konkav gewölbte Form (P2) jeweils einen stabilen Zustand bilden, während ein Übergang zwischen den beiden Formen instabil ist, so dass ein Klick-Klack-Effekt oder eine Schnappwirkung entsteht.

10. Abdeckkappe (10) nach einem der vorherigen Ansprüche 6 bis 9, die zumindest teilweise aus einem magnetischem Material hergestellt ist.

11. Abdeckkappe (10) nach einem der vorherigen Ansprüche 6 bis 10, die zumindest teilweise aus kaltgewalztem Stahlblech hergestellt ist und vorzugsweise mit Zinn beschichtet ist.

12. Verfahren zum Abdecken einer Öffnung (20) mit:
Ausbilden einer Abdeckkappe (10) mit einer konvex gewölbten Form (P1), die durch Umschnappen in eine konkav gewölbte Form (P2) überführbar ist,
Ausbilden eines Umfangsrands der Abdeckkappe (10) derart, dass in der konkav gewölbten Form (P2) ein Eingriff mit einer Öffnung (20) ermöglicht wird,
Einsetzen der Abdeckkappe (10) in der konvex gewölbten Form (P1) in die Öffnung (20), und
Drücken der Abdeckkappe (10), um ein Umschnappen in die konkav gewölbte Form (P2) zu bewirken.

13. Verfahren nach Anspruch 12, des weiteren mit dem Ausbilden eines hinterschnittenen Rands (22) der Öffnung (20), um die Abdeckkappe (10) formschlüssig zu befestigen.

14. Verfahren nach Anspruch 12 oder 13, des weiteren mit dem Ausbilden der Abdeckkappe (10) derart, dass durch Einsetzen der Abdeckkappe (10) in die Öffnung (20) und Umschnappen der Abdeckkappe (10) eine im wesentlichen glatte oder konkave Oberfläche erzeugt wird.

15. Verfahren zum Entfernen der in der konkaven Form (P2) mit der Öffnung (20) in Eingriff befindlichen Abdeckkappe (10) aus der Öffnung (20) mit:
Ansetzen eines Magneten an die Abdeckkappe (10),
Aufbringen einer Zugkraft auf den Magneten, um die Abdeckkappe (10) in die konvex gewölbte Form (P1) zurückzubringen, und
Herausziehen der Abdeckkappe (10) aus der Öffnung (20).
